# EUROPÄISCHE PATENTSCHRIFT

(11) **EP 2 544 835 B1**
(45) Veröffentlichungstag und Bekanntmachung des Hinweises auf die Patenterteilung: **05.03.2014**
(21) Anmeldenummer: 11708829.4
(22) Anmeldetag: 14.03.2011
(51) Int. Cl.: B21C 47/24, B21C 47/32

(54) **VERFAHREN UND VORRICHTUNG ZUM ABLEGEN EINES METALLBUNDES**
METHOD AND DEVICE FOR DEPOSITING A METAL COIL
PROCÉDÉ ET DISPOSITIF POUR DÉPOSER UNE BOBINE MÉTALLIQUE

(30) Priorität: 10.12.2010 DE 102010062865; 27.08.2010 DE 102010035690; 12.03.2010 DE 102010011171
(43) Veröffentlichungstag der Anmeldung: 16.01.2013
(73) Patentinhaber: SMS Siemag AG, 40237 Düsseldorf (DE)
(72) Erfinder: CRAMER, Ulrich, 57439 Attendorn (DE); HOLZHAUER, Thomas, 57399 Kirchhundem (DE); FUCHS, Wolfgang, 57271 Hilchenbach (DE); KASTNER, Andreas, 57399 Kirchhundem (DE); MENGEL, Christian, 57074 Siegen (DE); MÜLLER, Heinz-Adolf, 57234 Wilnsdorf (DE); HEIDE, Carsten, 57250 Netphen (DE); HOFMANN, Karl, Robert, 57250 Netphen (DE)
(74) Vertreter: Klüppel, Walter
(86) Internationale Anmeldenummer: PCT/EP2011/053822
(87) Internationale Veröffentlichungsnummer: WO 2011/110696

(56) Entgegenhaltungen:
- WO-A1-2006/111259
- JP-A- 6 047 438
- JP-A- 2010 005 631
- US-A- 4 096 724

## Beschreibung

Die Erfindung betrifft ein Verfahren zum Ablegen eines zu einem Metallbund aufgewickelten Metallbandes auf einem ersten und einem zweiten Auflagepunkt einer Vorrichtung. Die Erfindung betrifft weiterhin die Vorrichtung selber, zum Beispiel in Form eines Bundwagens.

### Stand der Technik

Bei der Produktion von konventionellen Warmbändern besteht ein Trend in der Produktion von Materialien mit hoher Festigkeit und großer Banddicke. Diese werden für die Herstellung von Röhrenstählen eingesetzt sowie für Verschleißflächen. Werden diese Materialien aufgewickelt verbleibt im Bund eine Restspannung, die das Bandende wieder öffnen will. Wird eine Grenze für die Restspannung überschritten, kann das Bund außermittig auf einem Bundwagen zu liegen kommen, sich selbst vom Bundwagen heben oder aufspringen (Uhrfedereffekt).

Im Stand der Technik sind verschiedene Vorrichtungen und Verfahren bekannt, die sich mit der stabilen Lagerung und Handhabung von aufgewickeltem Material mit höherer Restspannung beschäftigen.

In der Patentschrift WO/2006/111259 wird eine stationäre Vorrichtung zur Probennahme an Metallbunden diskutiert, bei der das Bund in einer stabilen Lage auf einer Bodenrolle und von mindestens einer Andrückrolle gehalten wird, wobei die sonst übliche ortsfeste zweite Bodenrolle von der Bundmantelfläche abgehoben wird, um eine prozesstechnisch günstige freie Bandlänge für die Probennahme zu erzeugen. Die Andrückrollen haben dabei einen Abstand von mehr als 90° zur ortsfesten Rolle. Im Weiteren beschäftigt sich diese Anmeldung mit den Vorrichtungen und dem Verfahren der Probennahme von Metallbunden.

In der nicht vorveröffentlichten Patentanmeldung DE 10 2009 060 257.7 wird eine Lagerung von Metallbunden auch zum Bundaustrag aus einem Haspel vorgeschlagen, bei der das Bund an mindestens 3 Auflagepunkten gehalten wird. Hier wird auch ein Auseinanderfahren von zwei Auflagern zur Aufnahme von Bunden unterschiedlicher Durchmesser vorgeschlagen. Nachteilig an dieser Lösung ist, dass immer drei Auflagepunkte vorhanden sind, egal ob sie für eine stabile Lagerung des Metallbundes im Einzelfall notwendig sind oder nicht. Die drei Auflagepunkte benötigen bei Metallbunden ohne hohe Restspannung unnötig viel Platz.

Die Japanische Patentanmeldung JP 60 47 438 A offenbart einen Bundwagen mit zwei Auflagepunkten zum Ablegen eines Metallbundes. Die Auflagepunkte sind höhenverstellbar auf dem Bundwagen angeordnet, aber zueinander ortsfest positioniert. Beide Auflagepunkte sind in Form einer Rolle ausgebildet, von denen eine über einen Motor und einen Kettenantrieb angetrieben werden kann.

Ausgehend von dem zuletzt genannten Stand der Technik liegt der Erfindung die Aufgabe zugrunde, ein Verfahren und eine Vorrichtung zum Ablegen eines Metallbundes auf zwei Auflagepunkten dahingehend weiterzubilden, dass das Metallbund sicherer gelagert werden kann.

Diese Aufgabe wird gelöst durch das in Anspruch 1 beanspruchte Verfahren. Dieses ist gekennzeichnet durch folgende Schritte: Überprüfen und Feststellen, ob das Metallbund in einer instabilen Gleichgewichtslage auf den beiden ortfesten Auflagepunkten aufliegt oder aufliegen würde, und wenn ja: Ablegen des Metallbundes auf die beiden ortsfesten Auflagepunkte, sofern dies nicht bereits zuvor im Rahmen der Überprüfung der Gleichgewichtslage erfolgt war, und Anstellen mindestens eines dritten beweglichen Auflagepunktes gegen den äußeren Umfang des Metallbundes zum Stabilisieren des Metallbundes auf der Vorrichtung.

Der Begriff "instabile Gleichgewichtslage" bezeichnet im Rahmen der vorliegenden Erfindung verschiedene Risiken oder Instabilitäten, welche beim Handhaben und insbesondere beim Ablegen von Metallbunden mit hoher Restspannung auftreten können. Aufgrund der hohen Restspannung kann das Metallbund außermittig auf einem Bundwagen zum Liegen kommen und aufgrund des Uhrfedereffektes eigenständig aufspringen. Es besteht dann die Gefahr, dass das Bund sich selbst vom Wagen hebt und vom Wagen abfällt. Alle diese Effekte repräsentieren eine instabile Gleichgewichtslage des Metallbundes im Sinne der vorliegenden Beschreibung.

Das Verdienst der Erfindung liegt darin begründet, dass Möglichkeiten aufgezeigt werden, wie derartige problembehaftete Metallbunde erkannt werden können, um dann gegebenenfalls geeignete Maßnahmen treffen zu können, um eine sichere Ablage derartiger Metallbunde auf zwei Auflagepunkten zu gewährleisten.

Bei der vorliegenden Erfindung wird davon ausgegangen, dass der erste und der zweite Auflagepunkt ortsfest ausgebildet sind. Das heißt, bei Ablage eines instabilen Metallbundes, nachfolgend auch Coil genannt, auf diese beiden Auflagepunkte können diese nicht in ihrer relativen Position zueinander verändert werden, so dass sich auf diese Weise die Ablage des Coils auf dem ersten und dem zweiten Auflagepunkt stabilisieren ließe. Die Ablage des Metallbundes auf dem ersten und dem zweiten Auflagepunkt bleibet also instabil. Um dennoch eine Stabilisierung der Ablage - auch für einen späteren Transport des Metallbundes - gewährleisten zu können, wird deshalb erfindungsgemäß vorgesehen, dass ein dritter beweglicher Auflagepunkt gegen den äußeren Umfang des Metallbundes angestellt wird. Die Anstellung erfolgt vorzugsweise so, dass sie einer aus der inhärenten Instabilität bzw. aus der internen Restspannung resultierenden unerwünschten Bewegung des Metallbundes entgegenwirkt bzw. diese aufhält oder unterbindet.

Die Überprüfung der besagten problematischen Eigenschaften des Metallbundes kann entweder erfolgen, wenn das Metallbund bereits auf den beiden Auflagepunkten aufliegt oder aber rein fiktiv, wenn das Metallbund aufliegenden würde. Aus diesem Grund wird im Anspruch 1 von "... aufliegt oder aufliegen würde" gesprochen. Ein konkretes Verständnis dieser Sachverhalte ergibt sich bei der späteren Diskussion der Ausführungsbeispiele.

Gemäß einem ersten Ausführungsbeispiel umfasst der Schritt des Überprüfens und Feststellens der Gleichgewichtslage folgende Teilschritte:
Überprüfen, ob folgende Bedingung erfüllt ist, nämlich ob der Durchmesser des Metallbundes kleiner als ein Durchmesser-Schwellenwert und die Dicke des Metallbandes größer als ein Dicken-Schwellenwert und die Festigkeit des Materials des Metallbandes größer als ein Festigkeits-Schwellenwert ist; und
Fingieren der Feststellung, dass das Metallbund in einer instabilen Gleichgewichtslage auf den beiden ortsfesten Auflagepunkten aufliegen würde, wenn die Bedingung erfüllt ist.

Diese erste Möglichkeit der Überprüfung erfolgt vorteilhafterweise alleine durch Auswerten der genannten Kriterien des Metallbandes und Metallbundes. Das Metallbund muss für die Durchführung der Überprüfung nicht tatsächlich auf den beiden Auflagepunkten abgelegt sein. Es müssen keine aufwändigen Messungen an dem Metallbund selber oder an den Auflagepunkten vorgenommen werden. Die Kriterien können für typischerweise behandelte Materialien in einer Tabelle hinterlegt sein. Sie sind dann für einen Werker vor Ort für einzelne Metallbunde schnell abrufbar. Die instabile Gleichgewichtslage, für den Fall, dass das Metallbund auf den Auflagepunkten abgelegt wäre, wird prognostiziert bzw. vorhergesagt. Deshalb wird die besagte Feststellung der instabilen Gleichgewichtslage bei diesem Ausführungsbeispiel lediglich fingiert im Sinne von unterstellt oder angenommen oder vorhergesagt.

Vorteilhafterweise wird der Durchmesser-Schwellenwert vorgegeben zu 2200mm, der Dicken-Schwellenwert vorgegeben zu 5mm und der Festigkeits-Schwellenwert, insbesondere für die Warmzugfestigkeit des Materials, vorgegeben zu 250*10⁶ N/m².

Die bei der ersten Möglichkeit zur Überprüfung der instabilen Gleichgewichtslage geprüfte Bedingung kann zusätzlich folgende Kriterien umfassen, nämlich, dass die Temperatur des Metallbundes beim Ablegen kleiner als ein vorgegebener Temperatur-Schwellenwert und die Warmstreckgrenze des Materials des Metallbandes größer als ein vorgegebener Streckgrenzen-Schwellenwert ist. Die Bedingung wäre dann nur erfüllt, wenn alle Kriterien, auch die Zusätzlichen, erfüllt sind. Dies hat den Vorteil, dass die in diesem Fall fingierte Feststellung einer instabilen Gleichgewichtslage zusätzlich abgesichert und damit belastbarer ist.

Vorteilhafterweise wird für die zusätzlichen Kriterien der Temperatur-Schwellenwert vorgegeben zu 600°C und der Streckgrenzen-Schwellenwert vorgegeben zu 250*10⁶ N/m².

Neben der ersten Möglichkeit besteht eine zweite Möglichkeit zum Überprüfen und Feststellen der Gleichgewichtslage. Diese zweite Möglichkeit umfasst folgende Teilschritte: Ablegen des Metallbundes auf den beiden ortsfesten Auflagepunkten, Fällen des Lotes von der Mitte des Metallbundes hinunter zu den Auflagepunkten; Überprüfen, ob das Lot in die Mitte zwischen den beiden Auflagepunkten fällt; und Feststellen, dass das Metallbund in einer instabilen Gleichgewichtslage auf den beiden Auflagepunkten aufliegt, wenn das Lot nicht zumindest in eine vorgegebene Lot-Toleranzschwelle um die Mitte zwischen den beiden Auflagepunkten fällt. Diese zweite Möglichkeit hat den Vorteil, dass sie ohne teure und komplizierte Gerätschaften notfalls auch vom Werker vor Ort durchgeführt werden kann.

Die Lot-Toleranzschwelle kann beispielsweise auf +/- 10% des Durchmessers des Metallbundes bezogen auf die Mitte zwischen den Auflagepunkten festgelegt werden.

Neben der ersten und zweiten Möglichkeit besteht eine dritte Möglichkeit zum Überprüfen und Feststellen der Gleichgewichtslage. Diese dritte Möglichkeit umfasst folgende Teilschritte: Ablegen des Metallbundes auf den beiden ortsfesten Auflagepunkten; Messen der von dem ersten Auflagepunkt aufgenommenen Kraftbelastung, Vergleichen der gemessenen Kraftbelastung mit dem Gesamtgewicht des Metallbundes; und Feststellen, dass das Metallbund in einer instabilen Gleichgewichtslage auf den beiden Auflagepunkten aufliegt, wenn die gemessene Kraftbelastung des ersten Auflagepunktes um mehr als eine vorgegebene Belastungs-Toleranzschwelle von dem halben Gesamtgewicht des Metallbundes abweicht. Diese dritte Möglichkeit benötigt, abgesehen von einer Prüfeinrichtung mit einer integrierten Auswerteeinrichtung für den Gewichtsvergleich, vorteilhafterweise lediglich eine Kraftmesseinrichtung an einem der beiden Auflagepunkte.

Neben der ersten, zweiten und dritten Möglichkeit besteht eine vierte Möglichkeit zum Überprüfen und Feststellen der Gleichgewichtslage. Diese vierte Möglichkeit umfasst folgende Teilschritte: Ablegen des Metallbundes auf den beiden ortsfesten Auflagepunkten; Messen der von dem ersten und dem zweiten Auflagepunkt aufgenommenen Kraftbelastung, wenn das Metallbund auf den beiden Auflagepunkten aufliegt; Vergleichen der gemessenen Kraftbelastungen miteinander; und Feststellen, dass das Metallbund in einer instabilen Gleichgewichtslage auf den beiden Auflagepunkten aufliegt, wenn die gemessenen Kraftbelastungen pro Auflagepunkt um mehr als eine vorgegebene Belastungs-Toleranzschwelle voneinander abweichen.

Die Belastungs-Toleranzschwelle für einen der Auflagepunkte bei der dritten und vierten Möglichkeit wird vorzugsweise vorgegeben zu +/-25%, weiter vorzugsweise zu +/-10% oder noch weiter vorzugsweise zu +/-5% der Gewichtskraft des Metallbundes.

Typischerweise wird jeweils nur eine der aufgezeigten vier Möglichkeiten für die Überprüfung und Feststellung der Gleichgewichtslage verwendet; insofern sind es Alternativen. Allerdings können natürlich auch mehrere der Möglichkeiten bei einem Metallbund angewandt werden.

Vorzugsweise wird der dritte und werden eventuell weitere bewegliche Auflagepunkte unterhalb der horizontalen Mittenebene des Metallbundes gegen dessen äußeren Umfang angestellt, so dass sie neben den beiden ortsfesten Auflagepunkten jeweils zumindest einen Teil des Gesamtgewichts des Metallbundes aufnehmen.

Vorteilhafterweise wird der dritte und werden eventuelle weitere Auflagepunkte jeweils weiter außen als die beiden ortsfesten Auflagepunkte unterhalb der Mittenebene an den Umfang des Metallbundes angestellt. Der dritte und ein vierter Auflagepunkt können spiegelsymmetrisch angestellt sein. Dadurch wird die Sicherheit für das abgelegte Metallbund weiter erhöht, im Vergleich zu einer engräumigeren Anstellung.

Der dritte Auflagepunkt wird vorzugsweise in dem Quadranten des Querschnitts des Metallbundes angestellt, in welchem der ortsfeste Auflagepunkt mit der höheren Kraftbelastung bei Aufliegen des Metallbundes angeordnet ist. Dort besteht dann am ehesten die Gefahr, dass das Metallbund aufspringt oder von dem Bundwagen abspringt, was durch die dortige Anstellung des dritten Auflagepunktes vorteilhafterweise verhindert wird.

Gemäß einer ersten Alternative kann das Anstellen des mindestens dritten Auflagepunktes positionsgesteuert erfolgen, indem der dritte Auflagepunkt auf eine in Abhängigkeit des Durchmessers des Metallbundes vorgegebene Sollposition gefahren und dort verriegelt wird. Die Verriegelung ist notwendig, damit eine bei einer eventuellen Bewegung des Metallbundes auftretende Kraft auf den dritten Auflagepunkt von diesem aufgenommen oder kompensiert werden kann, um der unerwünschten Bewegung des Metallbundes Einhalt zu gebieten.

Gemäß einer zweiten Alternative kann das Anstellen des mindestens dritten Auflagepunktes positionsgeregelt erfolgen, indem der dritte Auflagepunkt auf eine in Abhängigkeit des Durchmessers des Metallbundes vorgegebene Sollposition gefahren und die Sollposition - notfalls unter Kraftaufwand gegen das Metallbund-von der Regeleinrichtung, welche die Positionsregelung durchführt, durch Ausregeln gehalten wird. In diesem Fall erfolgt keine Verriegelung des Auflagepunktes an der Sollposition. Bei der Positionsregelung wird das Erreichen bzw. die Einhaltung der Sollposition durch eine Positionsgebereinrichtung überwacht.

Schließlich kann das Anstellen des mindestens dritten Auflagepunktes gemäß einer dritten Alternative kraftgeregelt erfolgen, indem der dritte Auflagepunkt mit einer Andrückkraft gegen den äußeren Umfang des Metallbundes angestellt und die Andrückkraft auf einen vorgegebenen Sollkraftwert ausgeregelt wird.

Das Anstellen des mindestens dritten Auflagepunktes gegen das Metallbund erfolgt, ohne die instabile Ablage des Metallbundes auf den beiden ortsfesten Auflagepunkten zu verändern. Die Stabilität der Ablage wird bei der vorliegenden Erfindung alleine durch das Anstellen des mindestens dritten Auflagepunktes an das Metallbund bewirkt.

Bei Bunden, die eine zusätzliche Stabilisierung aufgrund der geringen Restspannungen im Bund nicht erfordern, kann der zusätzliche dritte Auflagepunkt so gestellt werden, dass er das Bund nicht berührt. Durch die variable Positionierung des dritten Auflagerpunktes kann dieser vorteilhaft Platz sparend und geschützt in die Konstruktion unter den zwei festen Auflagern gestellt werden. Hierdurch ist es für weiche und dünne Bänder bei maximaler Produktionsrate möglich das Bund schnell auszutragen. Zusätzlicher Zeitaufwand zur Platzierung des dritten Auflagers wird vermieden. Zusätzliche Oberflächenbeanspruchungen und mögliche Oberflächeneffekte durch weitere Auflagen werden vermieden.

Der mindestens dritte Auflagepunkt ist in einem horizontalen Abstandsbereich x von x = 200 - 1200 mm vom Lot von der Mitte des Metallbundes an das Metallbund angestellt.

Bei der Vorrichtung kann es sich um einen Bundwagen oder eine sonstige - auch ortsfeste - Ablage für das Metallbund handeln.

Das Verfahren kann manuell oder automatisch durchgeführt werden.

Die oben genannte Aufgabe wird weiterhin gelöst durch ein Verfahren gemäß Anspruch 9, eine Vorrichtung gemäß Anspruch 10 und einen Bundwagen gemäß Anspruch 18. Die Vorteile dieser Lösungen entsprechen - soweit gleiche Merkmale oder Merkmalskombinationen in Rede stehen - den oben erwähnten Vorteilen.

Die Erfindung wird weiterhin nachfolgend unter Bezugnahme auf eine Reihe bevorzugter Ausführungsformen, die in den folgenden Abschnitten definiert sind, beschrieben.
1. Verfahren zum Ablegen eines Metallbundes auf einem ersten ortsfesten und einem zweiten ortsfesten Auflagepunkt einer Vorrichtung, gekennzeichnet durch folgende Schritte:
   Überprüfen und Feststellen, ob das Metallbund in einer instabilen Gleichgewichtslage auf den beiden ortsfesten Auflagepunkten aufliegt oder liegen würde; und
   wenn ja:
      Ablegen des Metallbundes auf die beiden ortsfesten Auflagepunkte, sofern dies nicht bereits zuvor im Rahmen der Überprüfung der Gleichgewichtslage erfolgt war; und
      Anstellen mindestens eines dritten beweglichen Auflagepunktes gegen den äußeren Umfang des Metallbundes zum Stabilisieren des Metallbundes auf der Vorrichtung.
2. Verfahren nach Abschnitt 1,
   dadurch gekennzeichnet, dass
   der Schritt des Überprüfens und Feststellens der Gleichgewichtslage folgende Teilschritte umfasst:
   Überprüfen, ob folgende Bedingung erfüllt ist:
      der Durchmesser des Metallbundes kleiner als ein Durchmesser-Schwellenwert und die Dicke des Metallbandes größer als ein Dicken-Schwellenwert und die Festigkeit des Materials des Metallbandes größer als ein Festigkeits-Schwellenwert ist; und
      Fingieren der Feststellung, dass das Metallbund in einer instabilen Gleichgewichtslage auf den beiden ortsfesten Auflagepunkten aufliegen würde, wenn die Bedingung erfüllt ist.
3. Verfahren nach Abschnitt 2,
   dadurch gekennzeichnet, dass
   der Durchmesser-Schwellenwert vorgegeben wird zu 2200mm;
   der Dicken-Schwellenwert vorgegeben wird zu 5mm; und
   der Festigkeits-Schwellenwert, insbesondere für die Warmzugfestigkeit des Materials, vorgegeben wird zu 250*10⁶ N/m².
4. Verfahren nach Abschnitt 2 oder 3,
   dadurch gekennzeichnet,
   dass die Bedingung zusätzlich folgende Kriterien umfasst: dass die Temperatur des Metallbundes kleiner als ein vorgegebener Temperatur-Schwellenwert und die Warmstreckgrenze des Materials des Metallbandes größer als ein vorgegebener Streckgrenzen-Schwellenwert ist; und Fingieren der Feststellung, dass das Metallbund in einer instabilen Gleichgewichtslage auf den beiden ortsfesten Auflagepunkten aufliegen würde, wenn auch die zusätzlichen Kriterien erfüllt sind.
5. Verfahren nach Abschnitt 4,
   dadurch gekennzeichnet, dass
   der Temperatur-Schwellenwert vorgegeben wird zu 600°C; und
   der Streckgrenzen-Schwellenwert vorgegeben wird zu 250*10⁶ N/m².
6. Verfahren nach Abschnitt 1,
   dadurch gekennzeichnet, dass
   der Schritt des Überprüfens und Feststellens der Gleichgewichtslage folgende Teilschritte umfasst:
   Ablegen des Metallbundes auf den beiden ortsfesten Auflagepunkten;
   Fällen des Lotes von der Mitte des Metallbundes hinunter zu den Auflagepunkten;
   Überprüfen, ob das Lot in die Mitte zwischen den beiden Auflagepunkten fällt; und
   Feststellen, dass das Metallbund in einer instabilen Gleichgewichtslage auf den beiden Auflagepunkten aufliegt, wenn das Lot nicht zumindest in eine vorgegebene Lot-Toleranzschwelle um die Mitte zwischen den beiden ortsfesten Auflagepunkten fällt.
7. Verfahren nach Abschnitt 6,
   dadurch gekennzeichnet, dass
   die Lot-Toleranzschwelle bei +/- 10% des Durchmessers des Metallbundes bezogen auf die Mitte zwischen den Auflagepunkten liegt.
8. Verfahren nach Abschnitt 1,
   dadurch gekennzeichnet, dass
   der Schritt des Überprüfens und Feststellens der Gleichgewichtslage folgende Teilschritte umfasst:
   Ablegen des Metallbundes auf den beiden ortsfesten Auflagepunkten;
   Messen der von dem ersten Auflagepunkt aufgenommenen Kraftbelastung, wenn das Metallbund auf den beiden Auflagepunkten aufliegt;
   Vergleichen der gemessenen Kraftbelastung mit dem Gesamtgewicht des Metallbundes; und
   Feststellen, dass das Metallbund in einer instabilen Gleichgewichtslage auf den beiden ortsfesten Auflagepunkten aufliegt, wenn die gemessene Kraftbelastung des ersten Auflagepunktes um mehr als eine vorgegebene Belastungs-Toleranzschwelle von dem halben Gesamtgewicht des Metallbundes abweicht.
9. Verfahren nach Abschnitt 1,
   dadurch gekennzeichnet, dass
   der Schritt des Überprüfens und des Feststellens der Gleichgewichtslage folgende Teilschritte umfasst:
   Ablegen des Metallbundes auf den beiden ortsfesten Auflagepunkten;
   Messen der von dem ersten und dem zweiten Auflagepunkt aufgenommenen Kraftbelastung, wenn das Metallbund auf den beiden Auflagepunkten aufliegt;
   Vergleichen der gemessenen Kraftbelastungen miteinander; und Feststellen, dass das Metallbund in einer stabilen Gleichgewichtslage auf den beiden Auflagepunkten aufliegt, wenn die gemessenen Kraftbelastungen pro Auflagepunkt um mehr als eine vorgegebene Belastungs-Toleranzschwelle voneinander abweichen.
10. Verfahren nach einem der Abschnitte 8 oder 9,
   dadurch gekennzeichnet, dass
   die Belastungs-Toleranzschwelle für einen der Auflagepunkte vorgegeben ist vorzugsweise zu +/-25%, weiter vorzugsweise zu +/-10% oder noch weiter vorzugsweise zu +/-5%, der Gewichtskraft des Metallbundes.
11. Verfahren nach einem der vorangegangenen Abschnitte,
   dadurch gekennzeichnet, dass
   die beiden ortsfesten Auflagepunkte auf gleicher Höhe nebeneinander angeordnet sind.
12. Verfahren nach einem der vorangegangenen Abschnitte,
   dadurch gekennzeichnet, dass
   der dritte und eventuell weitere bewegliche Auflagepunkte unterhalb der Mittenebene des Metallbundes gegen dessen äußeren Umfang angestellt werden, so dass sie jeweils zumindest einen Teil des Gesamtgewichts des Metallbundes aufnehmen können.
13. Verfahren nach Abschnitt 12,
   dadurch gekennzeichnet, dass
   der dritte und eventuelle weitere Auflagepunkte jeweils weiter außen an den Umfang des Metallbundes angestellt werden, als die beiden ortsfesten Auflagepunkte angeordnet sind.
14.Verfahren nach Abschnitt 12 oder 13,
   dadurch gekennzeichnet, dass
   der dritte Auflagepunkt in dem Quadranten des Querschnitts des Metallbundes angestellt wird, in welchem der ortsfeste Auflagepunkt mit der höheren Kraftbelastung bei Aufliegen des Metallbundes angeordnet ist.
15.Verfahren nach Abschnitt 12 oder 13,
   dadurch gekennzeichnet, dass
   der dritte und ein beweglicher vierter Auflagepunkt spiegelsymmetrisch in Bezug auf die beiden ortsfesten Auflagepunkte jeweils weiter außen in der unteren Hälfte an den Umfang des Metallbundes angestellt werden.
16.Verfahren nach einem der vorangegangenen Abschnitte,
   dadurch gekennzeichnet, dass
   das Anstellen des mindestens dritten Auflagepunktes positionsgesteuert erfolgt, indem der dritte Auflagepunkt auf eine in Abhängigkeit des Durchmessers des Metallbundes vorgegebene Sollposition gefahren und dort verriegelt wird.
17.Verfahren nach einem der Abschnitte 1 bis 15,
   dadurch gekennzeichnet, dass
   das Anstellen des mindestens dritten Auflagepunktes positionsgeregelt erfolgt, indem der dritte Auflagepunkt auf eine in Abhängigkeit des Durchmessers des Metallbundes vorgegebene Sollposition gefahren und die Sollposition - notfalls unter Kraftaufwand gegen das Metallbund - durch Ausregeln gehalten wird.
18. Verfahren nach einem der Abschnitte 1 bis 15,
   dadurch gekennzeichnet, dass
   das Anstellen des mindestens dritten Auflagepunktes kraftgeregelt erfolgt, indem der dritte Auflagepunkt mit einer Andrückkraft gegen den äußeren Umfang des Metallbundes angestellt und die Andrückkraft auf einen vorgegebenen Sollkraftwert ausgeregelt wird.
19. Verfahren nach einem der vorangegangenen Abschnitte,
   dadurch gekennzeichnet, dass
   das Anstellen des mindestens dritten Auflagepunktes gegen das Metallbund erfolgt, ohne die instabile Ablage des Metallbundes auf den beiden ortsfesten Auflagepunkten zu verändem.
20.Verfahren nach einem der vorangegangenen Abschnitte,
   dadurch gekennzeichnet, dass
   das Anstellen des mindestens dritten Auflagepunktes gegen das Metallbund unterbleibt, wenn zuvor eine stabile Gleichgewichtslage des Metallbundes auf den beiden ortsfesten Auflagepunkten festgestellt wurde.
21. Verfahren nach einem der vorangegangenen Abschnitte,
   dadurch gekennzeichnet, dass
   der mindestens dritte Auflagepunkt in einem horizontalen Abstandsbereich x von x = 200 - 1200 mm an das Metallbund angestellt wird.
22. Verfahren zum Ablegen eines Metallbundes auf einem ersten ortsfesten und einem zweiten ortsfesten Auflagepunkt einer Vorrichtung,
   gekennzeichnet durch folgende Schritte:
   Überprüfen, ob die Bedingung erfüllt ist, dass der Durchmesser des Metallbundes kleiner als ein vorgegebener Durchmesser-Schwellenwert und die Dicke des Metallbandes größer als ein vorgegebener Dicken-Schwellenwert und die Festigkeit des Materials des Metallbandes größer als ein vorgegebener Festigkeits-Schwellenwert ist,
   und wenn die Bedingung erfüllt ist:
      Fingieren der Feststellung, dass das Metallbund in einer instabilen Gleichgewichtslage auf den beiden ortsfesten Auflagepunkten aufliegen würde;
      Ablegen des Metallbundes auf die beiden ortsfesten Auflagepunkte, sofern dies nicht bereits zuvor erfolgt war; und
      Anstellen mindestens eines dritten beweglichen Auflagepunktes gegen den äußeren Umfang des Metallbundes zum Stabilisieren des Metallbundes auf der Vorrichtung.
23.Verfahren nach Abschnitt 22,
   dadurch gekennzeichnet, dass
   der dritte und eventuell weitere bewegliche Auflagepunkte in der unteren Hälfte des Metallbundes gegen dessen äußeren Umfang angestellt werden, so dass sie jeweils zumindest einen Teil des Gesamtgewichts des Metallbundes aufnehmen können.
24.Verfahren nach Abschnitt 22 oder 23,
   dadurch gekennzeichnet, dass
   der dritte und eventuelle weitere Auflagepunkte jeweils weiter außen in der unteren Hälfte an den Umfang des Metallbundes angestellt werden, als die beiden ortsfesten Auflagepunkte angeordnet sind.
25. Verfahren nach einem der Abschnitte 22 bis 24,
   dadurch gekennzeichnet, dass
   der mindestens dritte Auflagepunkt in einem horizontalen Abstandsbereich x von x = 200 - 1200 mm an das Metallbund angestellt wird.
26. Vorrichtung mit
   einem ersten ortsfesten und einem zweiten ortsfesten Auflagepunkt zum Ablegen des Metallbundes auf den beiden Auflagepunkten;
   dadurch gekennzeichnet,
   dass eine Prüfeinrichtung vorgesehen ist zum Überprüfen und Feststellen, ob das Metallbund in einer stabilen Gleichgewichtslage auf den beiden ortsfesten Auflagepunkten aufliegt oder liegen würde;
   dass mindestens ein dritter positionierbarer Auflagepunkt vorgesehen ist; und
   dass eine Steuereinrichtung vorgesehen ist zum Anstellen des dritten Auflagepunktes gegen den äußeren Umfang des Metallbundes zum Stabilisieren des Metallbundes auf der Vorrichtung, wenn das Metallbund gemäß der Feststellung in einer instabilen Gleichgewichtslage auf den beiden ortsfesten Auflagepunkten aufliegt oder aufliegen würde.
27. Vorrichtung nach Abschnitt 26,
   dadurch gekennzeichnet, dass
   die Prüfeinrichtung ausgebildet ist, zu prüfen, ob folgende Bedingung erfüllt ist: der Durchmesser des Metallbundes ist kleiner als ein Durchmesser-Schwellenwert und die Dicke des Metallbandes ist größer als ein Dicken-Schwellenwert und die Festigkeit des Materials des Metallbandes ist größer als ein Festigkeits-Schwellenwert; und - wenn die Bedingung erfüllt ist -die Feststellung zu fingieren, dass das Metallbund in einer instabilen Gleichgewichtslage auf den beiden Auflagepunkten aufliegen würde.
28. Vorrichtung nach Abschnitt 27,
   dadurch gekennzeichnet, dass
   der Durchmesser-Schwellenwert vorgegeben ist zu 2200mm;
   der Dicken-Schwellenwert vorgegeben ist zu 5mm; und
   der Festigkeits-Schwellenwert, insbesondere für die Warmzugfestigkeit des Materials, vorgegeben ist zu 250*10⁶ N/m².
29. Vorrichtung nach Abschnitt 27 oder 28,
   dadurch gekennzeichnet,
   dass die Prüfeinrichtung weiterhin ausgebildet ist, die folgenden Kriterien der Bedingung zusätzlich zu prüfen: ob die Temperatur des Metallbundes kleiner als ein vorgegebener Temperatur-Schwellenwert und ob die Warmstreckgrenze des Materials des Metallbandes größer als ein vorgegebener Streckgrenzen-Schwellenwert ist; und die Feststellung, dass das Metallbund in einer instabilen Gleichgewichtslage auf den beiden Auflagepunkten aufliegen würde, nur dann zu fingieren, wenn auch die zusätzlichen Kriterien erfüllt sind.
30. Vorrichtung nach Abschnitt 29,
   dadurch gekennzeichnet, dass
   der Temperatur-Schwellenwert vorgegeben wird zu 600°C; und der Streckgrenzen-Schwellenwert vorgegeben wird zu 250*10⁶ N/m².
31. Vorrichtung nach Abschnitt 26,
   dadurch gekennzeichnet, dass
   die Prüfeinrichtung ausgebildet ist, folgende Schritte durchzuführen, wenn das Metallbund auf den beiden ortsfesten Auflagepunkten abgelegt ist: Fällen des Lotes von der Mitte des Metallbundes hinunter zu den Auflagepunkten;
   Überprüfen, ob das Lot in die Mitte zwischen den beiden Auflagepunkten fällt; und
   Feststellen, dass das Metallbund in einer instabilen Gleichgewichtslage auf den beiden Auflagepunkten aufliegt, wenn das Lot nicht zumindest in eine vorgegebene Lot-Toleranzschwelle um die Mitte zwischen den beiden Auflagepunkten fällt.
32. Vorrichtung nach Abschnitt 28,
   dadurch gekennzeichnet, dass
   die Lot-Toleranzschwelle bei +/-10% des Durchmessers des Metallbundes bezogen auf die Mitte zwischen den Auflagepunkten liegt.
33. Vorrichtung Abschnitt 26,
   dadurch gekennzeichnet, dass
   eine Kraftmesseinrichtung vorgesehen ist zum Messen der von dem ersten Auflagepunkt aufgenommenen Kraftbelastung, wenn das Metallbund auf den beiden Auflagepunkten aufliegt; und
   die Prüfeinrichtung ausgebildet ist zum Vergleichen der gemessenen Kraftbelastung mit dem Gesamtgewicht des Metallbundes und zum Feststellen, dass das Metallbund in einer instabilen Gleichgewichtslage auf den beiden Auflagepunkten aufliegt, wenn die gemessene Kraftbelastung des ersten Auflagepunktes um mehr als eine vorgegebene Belastungs-Toleranzschwelle von dem halben Gesamtgewicht des Metallbundes abweicht.
34. Vorrichtung, nach Abschnitt 26,
   dadurch gekennzeichnet, dass
   zwei Kraftmesseinrichtungen vorgesehen sind zum Messen der von dem ersten und dem zweiten Auflagepunkt aufgenommenen Kraftbelastung, wenn das Metallbund auf den beiden Auflagepunkten aufliegt; und
   die Prüfeinrichtung ausgebildet ist zum Vergleichen der gemessenen Kraftbelastungen miteinander und zum Feststellen, dass das Metallbund in einer instabilen Gleichgewichtslage auf den beiden Auflagepunkten aufliegt, wenn die gemessenen Kraftbelastungen pro Auflagepunkt um mehr als eine vorgegebene Belastungs-Toleranzschwelle voneinander abweichen.
35. Vorrichtung nach Abschnitt 33 oder 34,
   dadurch gekennzeichnet, dass
   die Belastungs-Toleranzschwelle für einen der Auflagepunkte vorgegeben ist vorzugsweise zu +/-25%, weiter vorzugsweise zu +/-10% oder noch weiter vorzugsweise zu +/-5%, der Gewichtskraft des Metallbundes.
36. Vorrichtung nach einem der Abschnitte 26 bis 35,
   dadurch gekennzeichnet, dass
   die beiden ortsfesten Auflagepunkte auf gleicher Höhe nebeneinander angeordnet sind.
37. Vorrichtung nach einem der Abschnitte 26 bis 36, dadurch gekennzeichnet, dass
   die Steuereinrichtung ausgebildet ist, den dritten Auflagepunkt, z.B. mit Hilfe eines Hydraulikzylinders, positionsgesteuert oder positionsgeregelt auf eine vorgegebene Sollposition zu fahren oder kraftgeregelt mit einer vorgegebenen Sollkraft gegen den äußeren Umfang des Metallbandes anzustellen.
38. Vorrichtung nach einem der Abschnitte 26 bis 37,
   dadurch gekennzeichnet, dass
   der erste und zweite Auflagepunkt jeweils entweder in Form einer Rolle oder eines Ablagebocks ausgebildet sind.
39. Vorrichtung nach einem der Abschnitte 26 bis 38,
   dadurch gekennzeichnet, dass
   der mindestens dritte Auflagepunkt entweder in Form einer anschwenkbaren Klappe oder Rolle ausgebildet ist.
40. Vorrichtung nach einem der Abschnitte 26 bis 39, dadurch gekennzeichnet, dass
   der mindestens dritte Auflagepunkt in der unteren Hälfte gegen den Umfang des Metallbundes anstellbar ist.
41. Vorrichtung nach Abschnitt 40,
   dadurch gekennzeichnet, dass
   der dritte und ein vierter beweglicher Auflagepunkt in Bezug auf die beiden ortsfesten Auflagepunkte beidseitig weiter außen gegen den Umfang des Metallbandes anstellbar sind.
42. Vorrichtung nach einem der Abschnitte 26 bis 41,
   dadurch gekennzeichnet, dass
   dass das Metallbund, wenn es auf der Vorrichtung abgelegt ist, ungebunden ist.
43. Vorrichtung nach einem der Abschnitte 26 bis 42,
   dadurch gekennzeichnet, dass
   dass es sich bei der Vorrichtung um einen Bundwagen handelt.
44. Vorrichtung nach einem der Abschnitte 26 bis 43,
   dadurch gekennzeichnet, dass der mindestens dritte Auflagepunkt in einem horizontalen Abstandsbereich x von x = 200 - 1200 mm an das Metallbund anstellbar ist.
45. Bundwagen mit
   einem ersten ortsfesten und einem zweiten ortsfesten Auflagepunkt zum Ablegen des Metallbundes auf den beiden Auflagepunkten;
   dadurch gekennzeichnet,
   dass eine Prüfeinrichtung vorgesehen ist zum Überprüfen, ob folgende Bedingung erfüllt ist: Ob der Durchmesser des Metallbundes kleiner als ein vorgegebener Durchmesser-Schwellenwert und die Dicke des Metallbandes größer als ein vorgegebener Dicken-Schwellenwert und die Festigkeit des Materials des Metallbandes größer als ein vorgegebener Festigkeits-Schwellenwert ist, und zum Fingieren der Feststellung, dass das Metallbund in einer instabilen Gleichgewichtslage auf den beiden ortsfesten Auflagepunkten aufliegen würde, wenn die Bedingung erfüllt ist.;
   dass mindestens ein dritter positionierbarer Auflagepunkt vorgesehen ist; und
   dass eine Steuereinrichtung vorgesehen ist zum Anstellen des dritten Auflagepunktes gegen den äußeren Umfang des Metallbundes zum Stabilisieren des Metallbundes auf der Vorrichtung, wenn das Metallbund gemäß der Feststellung in einer instabilen Gleichgewichtslage auf den beiden ortsfesten Auflagepunkten aufliegt.
46. Bundwagen nach Abschnitt 45,
   dadurch gekennzeichnet, dass der mindestens dritte Auflagepunkt in einem horizontalen Abstandsbereich x von x = 200 - 1200 mm an das Metallbund anstellbar ist.
47. Bundwagen nach Abschnitt 45 oder 46,
   dadurch gekennzeichnet, dass
   der dritte und eventuell weitere bewegliche Auflagepunkte in der unteren Hälfte des Metallbundes gegen dessen äußeren Umfang anstellbar ist, so dass sie jeweils zumindest einen Teil des Gesamtgewichts des Metallbundes aufnehmen können.
48. Bundwagen nach Abschnitt 45, 46 oder 47,
   dadurch gekennzeichnet, dass
   der dritte und eventuelle weitere Auflagepunkte jeweils weiter außen in der unteren Hälfte an den Umfang des Metallbundes angestellbar ist, als die beiden ortsfesten Auflagepunkte angeordnet sind.

Weitere vorteilhafte Ausgestaltungen der Erfindung sind Gegenstand der abhängigen Ansprüche.

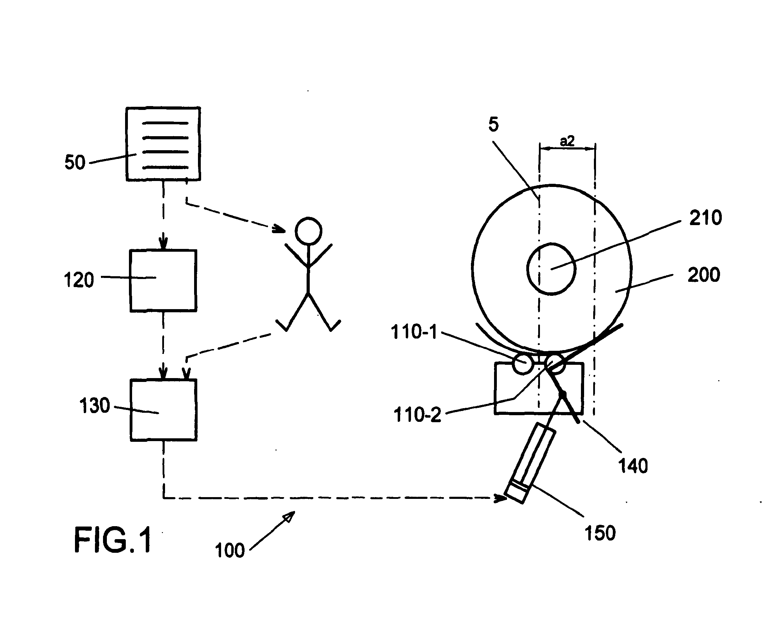

Der Beschreibung ist eine Figur 1 beigefügt, welche ein Ausführungsbeispiel der vorliegenden Erfindung zeigt.

Figur 1 zeigt die erfindungsgemäße Vorrichtung, zum Beispiel einen Bundwagen zum Ablegen und Transportieren eines zu einem Metallbund aufgewickelten Metallbandes. Die Vorrichtung 100 umfasst einen ersten Auflagepunkt 110-1 und einen zweiten Auflagepunkt 110-2. Beide Auflagepunkte sind beispielhaft in Form von Rollen ausgebildet, welche - vorzugsweise auf gleicher Höhe - drehbar, aber ansonsten ortsfest auf der Vorrichtung angeordnet sind. Ortsfest bedeutet, dass die beiden Auflagepunkte nicht relativ zueinander beweglich sind.

Neben den Auflagepunkten umfasst die erfindungsgemäße Vorrichtung eine Prüfeinrichtung 120 zum Überprüfen und Feststellen, ob das Metallbund 200 in einer stabilen Gleichgewichtslage auf den beiden ortsfesten Auflagepunkten 110-1 und 110-2 aufliegt oder aufliegen würde.

Für die Überprüfung der instabilen Gleichgewichtslage sind erfindungsgemäß verschiedene Verfahren vorgesehen, wie sie oben im allgemeinen Teil der Beschreibung näher erläutert sind. Einige dieser Verfahren erfordern, dass das Metallbund 200 tatsächlich auf den beiden ortsfesten Auflagepunkten 110-1, 110-2 aufliegt. Gemäß einem anderem Verfahren, wie dies in Figur 1 symbolisch dargestellt ist, wird die Instabilität des Metallbundes 200 rein theoretisch bzw. abstrakt durch Auswerten verschiedener Material- und Metallbund-Parameter überprüft. Vorzugsweise ist die Bedingung bzw. sind die Kriterien für typische Metallbunde 200 in einer Tabelle 50 hinterlegt, so dass zum Beispiel ein Werker vor Ort sehr einfach durch Auslesen oder Auswerten der Tabellendaten feststellen kann, ob ein bestimmtes Metallbund 200 im Hinblick auf seine inhärente Restspannung bzw. seine daraus abzuleitetende Gleichgewichtslage risikobehaftet ist oder nicht. Alternativ zu dem Werker kann die Auslesung bzw. Auswertung der Tabelle auch von der erfindungsgemäßen Prüfeinrichtung 120 übernommen werden. Der Werker 80 oder die Prüfeinrichtung 120 aktivieren im Falle eines risikobehafteten Metallbundes 200 eine Steuereinrichtung 130, welche auch als Regeleinrichtung ausgebildet sein kann, zum Anstellen eines dritten Auflagepunktes 140, in Figur 1 beispielhaft über einen Hydraulikzylinder 150. Der dritte Auflagepunkt 140 ist in Figur 1 beispielhaft als anstellbare Klappe ausgebildet.

Vorzugsweise wird der dritte Auflagepunkt nur gegen solche Metallbunde 200 angestellt, welche aufgrund ihrer hohen internen Restspannung bei der Ablage auf den beiden ortsfesten Auflagepunkten 110-1 und 110-2 problematisch sind. Ein solches Metallbund 200 ist in Figur 1 dargestellt. Seine Ablage auf den beiden ortsfesten Auflagepunkten 110-1, 110-2 ist insofern problematisch, als dass es außermittig auf den beiden ortsfesten Auflagepunkten aufliegt. Die Außermittigkeit ist daran zu erkennen, dass das Lot 5 durch die Mitte der beiden Auflagepunkte nicht zugleich auf durch die Mitte 210 des Metallbundes verläuft.

Weil die beiden Auflagepunkte 110-1 und 110-2 ortsfest angeordnet sind, kann die Gleichgewichtslage des Metallbundes 200 in Bezug auf die beiden Auflagepunkte 110-1 und 110-2 nicht dadurch stabilisiert werden, dass diese relativ zueinander verändert positioniert werden. Vielmehr wird die Ablage des Metallbundes 200 auf den beiden ortfesten Auflagepunkten erfindungsgemäß dadurch stabilisiert, dass der dritte Auflagepunkt 140 im Abstand a2 von dem Lot 5 an den äußeren Umfang des Metallbundes 200 angestellt wird.

Das Gewicht des Metallbundes ist proportional zu dessen Durchmesser. Bei der oben aufgezeigten ersten Möglichkeit zum Überprüfen und Feststellen der Gleichgewichtslage kann deshalb alternativ oder zusätzlich zu dem Vergleich des Durchmessers des Metallbundes mit einem Durchmesser-Schwellenwert auch ein Vergleich des Bundgewichtes mit einem Bundgewicht-Schwellenwert erfolgen. Im Rahmen der Bedingung müsste dann neben den anderen genannten Kriterien das Gewicht des jeweiligen Metallbundes kleiner sein als der Bundgewicht-Schwellenwert, damit die Bedingung für eine hohe Restspannung insgesamt erfüllt ist. Der Schwellenwert liegt bei 30t. Dieses Kriterium des Gewichts-Vergleiches gilt für alle beanspruchten Verfahren und Vorrichtungen.

Die Überprüfung und Feststellung der Gleichgewichtslage kann nicht nur für Einzelbunde, sondern auch für Bundensembles erfolgen. Für das Bundensemble braucht die Überprüfung jeweils nur einmal durchgeführt zu werden, wenn es aus Bunden mit im Wesentlichen gleichen geometrischen, physikalischen und werkstofftechnischen Eigenschaften besteht.

## Patentansprüche

1. Verfahren zum Ablegen eines Metallbundes (200) auf einem ersten (110-1) ortsfesten und einem zweiten (110-2) ortsfesten Auflagepunkt einer Vorrichtung (100), **gekennzeichnet**
**durch** folgende Schritte:
Überprüfen und Feststellen, ob das Metallbund (200) in einer instabilen Gleichgewichtslage auf den beiden ortsfesten Auflagepunkten (110-1; 110-2) aufliegt oder liegen würde; und
wenn ja:
Ablegen des Metallbundes (200) auf die beiden ortsfesten Auflagepunkte (110-1; 110-2), sofern dies nicht bereits zuvor im Rahmen der Überprüfung der Gleichgewichtslage erfolgt war; und
Anstellen mindestens eines dritten beweglichen Auflagepunktes (140) gegen den äußeren Umfang des Metallbundes (200) zum Stabilisieren des Metallbundes auf der Vorrichtung.

2. Verfahren nach Anspruch 1,
**dadurch gekennzeichnet, dass**
der Schritt des Überprüfens und Feststellens der Gleichgewichtslage folgende Teilschritte umfasst:
Überprüfen, ob folgende Bedingung erfüllt ist:
der Durchmesser des Metallbundes (200) kleiner als ein Durchmesser-Schwellenwert und die Dicke des Metallbandes größer als ein Dicken-Schwellenwert und die Festigkeit des Materials des Metallbandes größer als ein Festigkeits-Schwellenwert ist; und
Fingieren der Feststellung, dass das Metallbund (200) in einer instabilen Gleichgewichtslage auf den beiden ortsfesten Auflagepunkten aufliegen würde, wenn die Bedingung erfüllt ist.

3. Verfahren nach Anspruch 1,
**dadurch gekennzeichnet, dass**
der Schritt des Überprüfens und Feststellens der Gleichgewichtslage folgende Teilschritte umfasst:
Ablegen des Metallbundes (200) auf den beiden ortsfesten Auflagepunkten (110-1; 1110-2);
Fällen des Lotes (5) von der Mitte des Metallbundes (200) hinunter zu den Auflagepunkten (110-1; 110-2),
Überprüfen, ob das Lot (5) in die Mitte zwischen den beiden Auflagepunkten (110-1; 110-2) fällt; und
Feststellen, dass das Metallbund (200) in einer instabilen Gleichgewichtslage auf den beiden Auflagepunkten (110-1; 100-2) aufliegt, wenn das Lot (5) nicht zumindest in eine vorgegebene Lot-Toleranzschwelle um die Mitte zwischen den beiden ortsfesten Auflagepunkten (110-1; 110-2) fällt.

4. Verfahren nach Anspruch 1,
**dadurch gekennzeichnet, dass**
der Schritt des Überprüfens und Feststellens der Gleichgewichtslage folgende Teilschritte umfasst:
Ablegen des Metallbundes (200) auf den beiden ortsfesten Auflagepunkten (110-1; 110-2);
Messen der von dem ersten Auflagepunkt (110-1) aufgenommenen Kraftbelastung, wenn das Metallbund (200) auf den beiden Auflagepunkten (110-1; 110-2) aufliegt;
Vergleichender gemessenen Kraftbelastung mit dem Gesamtgewicht des Metallbundes (200); und
Feststellen, dass das Metallbund (200) in einer instabilen Gleichgewichtslage auf den beiden ortsfesten Auflagepunkten (110-1; 110-2) aufliegt, wenn die gemessene Kraftbelastung des ersten Auflagepunktes (110-1) um mehr als eine vorgegebene Belastungs-Toleranzschwelle von dem halben Gesamtgewicht des Metallbundes (200) abweicht.

5. Verfahren nach Anspruch 1,
**dadurch gekennzeichnet, dass**
der Schritt des Überprüfens und des Feststellens der Gleichgewichtslage folgende Teilschritte umfasst;
Ablegen des Metallbundes (200) auf den beiden ortsfesten Auflagepunkten (110-1; 110-2); Messen der von dem ersten und dem zweiten Auflagepunkt (110-1; 110-2) aufgenommenen Kraftbelastung, wenn das Metallbund (200) auf den beiden Auflagepunkten (110-1; 110-2) aufliegt; Vergleichen der gemessenen Kraftbelastungen miteinander; und
Feststellen, dass das Metallbund (200) in einer stabilen Gleichgewichtslage auf den beiden Auflagepunkten (110-1; 110-2) aufliegt, wenn die gemessenen Kraftbelastungen pro Auflagepunkt um mehr als eine vorgegebene Belastungs-Toleranzschwelle voneinander abweichen.

6. Verfahren nach einem der vorangegangenen Ansprüche,
**dadurch gekennzeichnet, dass**
die beiden ortsfesten Auflagepunkte (110-1; 110-2) auf gleicher Höhe nebeneinander angeordnet sind.

7. Verfahren nach einem der vorangegangenen Ansprüche,
**dadurch gekennzeichnet, dass**
der dritte (140) und eventuell weitere bewegliche Auflagepunkte unterhalb der Mittenebene des Metallbundes (200) gegen dessen äußeren Umfang angestellt werden, so dass sie jeweils zumindest einen Teil des Gesamtgewichts des Metallbundes aufnehmen können.

8. Verfahren nach einem der vorangegangenen Ansprüche,
**dadurch gekennzeichnet, dass**
das Anstellen des mindestens dritten Auflagepunktes (140) gegen das Metallbund (200) erfolgt, ohne die instabile Ablage des Metallbundes auf den beiden ortsfesten Auflagepunkten (110-1; 110-2) zu verändern.

9. Verfahren zum Ablegen eines Metallbundes (200) auf einem ersten (110-1) ortsfesten und einem zweiten (110-2) ortsfesten Auflagepunkt einer Vorrichtung (100), **gekennzeichnet durch** folgende Schritte:
Überprüfen, ob die Bedingung erfüllt ist, dass der Durchmesser des Metallbundes (200) kleiner als ein vorgegebener Durchmesser-Schwellenwert und die Dicke des Metallbandes größer als ein vorgegebener Dicken-Schwellenwert und die Festigkeit des Materials des Metallbandes größer als ein vorgegebener Festigkeits-Schwellenwert ist,
und wenn die Bedingung erfüllt ist:
Fingieren der Feststellung, dass das Metallbund (200) in einer instabilen Gleichgewichtslage auf den beiden ortsfesten Auflagepunkten (110-1; 110-2) aufliegen würde;
Ablegen des Metallbundes (200) auf die beiden ortsfesten Auflagepunkte (110-1; 110-2), sofern dies nicht bereits zuvor erfolgt war; und
Anstellen mindestens eines dritten beweglichen Auflagepunktes (140) gegen den äußeren Umfang des Metallbundes (200) zum Stabilisieren des Metallbundes auf der Vorrichtung (100).

10. Vorrichtung (100) mit
einem ersten (110-1) ortsfesten und einem zweiten (110-2) ortsfesten Auflagepunkt zum Ablegen eines Metallbundes (200) auf den beiden Auflagepunkten;
**dadurch gekennzeichnet.**
**dass** eine Prüfeinrichtung (120) vorgesehen ist zum Überprüfen und Feststellen, ob das Metallbund (200) in einer stabilen Gleichgewichtslage auf den beiden ortsfesten Auflagepunkten (110-1; 110-2) aufliegt oder liegen würde;
**dass** mindestens ein dritter positionierbarer Auflagepunkt (140) vorgesehen ist; und
**dass** eine Steuereinrichtung (130) vorgesehen ist zum Anstellen des dritten Auflagepunktes (140) gegen den äußeren Umfang des Metallbundes (200) zum Stabilisieren des Metallbundes (200) auf der Vorrichtung (100), wenn das Metallbund (200) gemäß der Feststellung in einer instabilen Gleichgewichtslage auf den beiden ortsfesten Auflagepunkten (110-1; 110-2) aufliegt oder aufliegen würde.

11. Vorrichtung nach Anspruch 10,
**dadurch gekennzeichnet, dass**
die Prüfeinrichtung (120) ausgebildet ist, zu prüfen, ob folgende Bedingung erfüllt ist:
der Durchmesser des Metallbundes (200) ist kleiner als ein Durchmesser-Schwellenwert und die Dicke des Metallbandes ist größer als ein Dicken-Schwellenwert und die Festigkeit des Materials des Metallbandes ist größer als ein Festigkeits-Schwellenwert; und - wenn die Bedingung erfüllt ist -die Feststellung zu fingieren, dass das Metallbund (200) in einer instabilen Gleichgewichtslage auf den beiden Auflagepunkten (110-1; 110-2) aufliegen würde.

12. Vorrichtung nach Anspruch 11,
**dadurch gekennzeichnet.**
**dass** die Prüfeinrichtung (120) weiterhin ausgebildet ist, die folgenden Kriterien der Bedingung zusätzlich zu prüfen: ob die Temperatur des Metallbundes (200) kleiner als ein vorgegebener Temperatur-Schwellenwert und ob die Warmstreckgrenze des Materials des Metallbandes größer als ein vorgegebener Streckgrenzen-Schwellenwert ist; und die Feststellung, dass das Metallbund (200) in einer instabilen Gleichgewichtslage auf den beiden Auflagepunkten (110-1; 110-2) aufliegen würde, nur dann zu fingieren, wenn auch die zusätzlichen Kriterien erfüllt sind.

13. Vorrichtung nach Anspruch 10,
**dadurch gekennzeichnet, dass**
die Prüfeinrichtung (120) ausgebildet ist, folgende Schritte durchzuführen, wenn das Metallbund (200) auf den beiden ortsfesten Auflagepunkten (110-1; 110-2) abgelegt ist:
Fällen des Lotes (5) von der Mitte des Metallbundes (200) hinunter zu den Auflagepunkten (110-1; 110-2),
Überprüfen, ob das Lot (5) in die Mitte zwischen den beiden Auflagepunkten (110-1; 110-2) fällt; und
Feststellen, dass das Metallbund (200) in einer instabilen Gleichgewichtslage auf den beiden Auflagepunkten (110-1; 110-2) aufliegt, wenn das Lot (5) nicht zumindest in eine vorgegebene Lot-Toleranzschwelle um die Mitte zwischen den beiden Auflagepunkten (110-1; 110-2) fällt.

14. Vorrichtung nach Anspruch 10,
**dadurch gekennzeichnet, dass**
eine Kraftmesseinrichtung vorgesehen ist zum Messen der von dem ersten Auflagepunkt (110-1) aufgenommenen Kraftbelastung, wenn das Metallbund (200) auf den beiden Auflagepunkten (110-1; 110-2) aufliegt; und
die Prüfeinrichtung (120) ausgebildet ist zum Vergleichen der gemessenen Kraftbelastung mit dem Gesamtgewicht des Metallbundes (200) und zum Feststellen, dass das Metallbund (200) in einer instabilen Gleichgewichtslage auf den beiden Auflagepunkten (110-1; 110-2) aufliegt, wenn die gemessene Kraftbelastung des ersten Auflagepunktes (110-1) um mehr als eine vorgegebene Belastungs-Toleranzschwelle von dem halben Gesamtgewicht des Metallbundes (200) abweicht.

15. Vorrichtung nach Anspruch 10,
**dadurch gekennzeichnet, dass**
zwei Kraftmesseinrichtungen vorgesehen sind zum Messen der von dem ersten (110-1) und dem zweiten (110-2) Auflagepunkt aufgenommenen Kraftbelastung, wenn das Metallbund (200) auf den beiden Auflagepunkten (110-1; 110-2) aufliegt; und
die Prüfeinrichtung (120) ausgebildet ist zum Vergleichen der gemessenen Kraftbelastungen miteinander und zum Feststellen, dass das Metallbund (200) in einer instabilen Gleichgewichtslage auf den beiden Auflagepunkten (110-1; 110-2) aufliegt, wenn die gemessenen Kraftbelastungen pro Auflagepunkt um mehr als eine vorgegebene Belastungs-Toleranzschwelle voneinander abweichen.

16. Vorrichtung nach einem der Ansprüche 10 bis 15, **dadurch gekennzeichnet, dass**
die Steuereinrichtung (130) ausgebildet ist, den dritten Auflagepunkt (140), z.B. mit Hilfe eines Hydraulikzylinders, positionsgesteuert oder positionsgeregelt auf eine vorgegebene Sollposition zu fahren oder kraftgeregelt mit einer vorgegebenen Sollkraft gegen den äußeren Umfang des Metallbandes anzustellen.

17. Vorrichtung nach einem der Ansprüche 10 bis 16,
**dadurch gekennzeichnet, dass**
dass es sich bei der Vorrichtung (100) um einen Bundwagen handelt.

18. Bundwagen (100) mit
einem ersten (110-1) ortsfesten und einem zweiten (110-2) ortsfesten Auflagepunkt zum Ablegen des Metallbundes (200) auf den beiden Auflagepunkten;
**dadurch gekennzeichnet,**
**dass** eine Prüfeinrichtung (120) vorgesehen ist zum Überprüfen, ob folgende Bedingung erfüllt ist: Ob der Durchmesser des Metallbundes (200) kleiner als ein vorgegebener Durchmesser-Schwellenwert und die Dicke des Metallbandes größer als ein vorgegebener Dicken-Schwellenwert und die Festigkeit des Materials des Metallbandes größer als ein vorgegebener Festigkeits-Schwellenwert ist, und zum Fingieren der Feststellung, dass das Metallbund (200) in einer instabilen Gleichgewichtslage auf den beiden ortsfesten Auflagepunkten (110-1; 110-2) aufliegen würde, wenn die Bedingung erfüllt ist.;
**dass** mindestens ein dritter positionierbarer Auflagepunkt (140) vorgesehen ist; und
**dass** eine Steuereinrichtung (130) vorgesehen ist zum Anstellen des dritten Auflagepunktes (140) gegen den äußeren Umfang des Metallbundes (200) zum Stabilisieren des Metallbundes auf der Vorrichtung, wenn das Metallbund (200) gemäß der Feststellung in einer instabilen Gleichgewichtslage auf den beiden ortsfesten Auflagepunkten (110-1; 110-2) aufliegt.

## Claims

1. Method of depositing a metal coil (200) on a first stationary support point (110-1) and a second stationary support point (110-2) of a device (100), **characterised by** the following steps:
checking and ascertaining whether the metal coil (200) rests or would rest in an unstable equilibrium position on the two stationary support points (110-1; 110-2); and
if so:
depositing the metal coil (200) on the two stationary support points (110-1; 110-2) insofar as this has not already taken place beforehand within the scope of checking the equilibrium position; and
adjusting at least one third, movable support point (140) against the outer circumference of the metal coil (200) for stabilising the metal coil on the device.

2. Method according to claim 1, **characterised in that** the step of checking and ascertaining the equilibrium position comprises the following sub-steps:
checking whether the following condition is fulfilled:
the diameter of the metal coil (200) is smaller than a diameter threshold value and the thickness of the metal strip is greater than a thickness threshold value and the strength of the material of the metal strip is greater than a strength threshold value; and
simulating determination that the metal coil (200) would rest in an unstable equilibrium position on the two stationary support points (110-1; 110-2) if the condition is fulfilled.

3. Method according to claim 1, **characterised in that** the step of checking and ascertaining the equilibrium position comprises the following sub-steps:
depositing the metal coil (200) on the two stationary support points (110-1; 110-2);
dropping the vertical (5) from the centre of the metal coil (200) down to the support points (110-1; 110-2);
checking whether the vertical (5) falls into the centre between the two support points (110-1; 110-2); and
determining that the metal coil (200) rests in an unstable equilibrium position on the two support points (110-1; 110-2) if the vertical (5) does not fall at least into a predetermined vertical tolerance threshold about the centre between the two support points.

4. Method according to claim 1, **characterised in that** the step of checking and ascertaining the equilibrium position comprises the following sub-steps:
depositing the metal coil (200) on the two stationary support points (110-1; 110-2);
measuring the force loading, which is accepted by the first support point (110-1), when the metal coil (200) rests on the two support points (110-1; 110-2);
comparing the measured force loading with the overall weight of the metal coil (200); and
determining that the metal coil (200) rests in an unstable equilibrium position on the two stationary support points (110-1; 110-2) when the measured force loading of the first support point (110-1) differs from half the total weight of the metal coil (200) by more than a predetermined load tolerance threshold.

5. Method according to claim 1, **characterised in that** the step of checking and ascertaining the equilibrium position comprises the following sub-steps:
depositing the metal coil (200) on the two stationary support points (110-1; 110-2);
measuring the force loading, which is accepted by the first support point (110-1) and the second support point (110-2), when the metal coil (200) rests on the two support points (110-1; 110-2);
comparing the measured force loadings with one another; and
determining that the metal coil (200) rests in an unstable equilibrium position on the two support points (110-1; 110-2) when the measured force loadings per support point differ from one another by more than a predetermined load tolerance threshold.

6. Method according to any one of the preceding claims, **characterised in that** the two stationary support points (110-1; 110-2) are arranged at the same height adjacent to one another.

7. Method according to any one of the preceding claims, **characterised in that** the third (140) and possible further movable support points under the centre plane of the metal coil (20) are adjusted against the outer circumference thereof so that they can each accept at least a part of the total weight of the metal coil.

8. Method according to any one of the preceding claims, **characterised in that** the adjustment of the at least third support point (140) against the metal coil (200) is carried out without changing the unstable deposit of the metal coil on the two stationary support points (110-1; 110-2).

9. Method of depositing a metal coil (200) on a first stationary support point (110-1) and a second stationary support point (110-2) of a device (100), **characterised by** the following steps:
checking whether the condition is fulfilled that the diameter of the metal coil (200) is smaller than a predetermined diameter threshold value and the thickness of the metal strip is greater than a predetermined thickness threshold value and the strength of the material of the metal strip is greater than a predetermined strength threshold value;
and if the condition is fulfilled:
simulating determination that the metal coil (200) would rest in an unstable equilibrium position on the two stationary support points (110-1; 110-2);
depositing the metal coil (200) on the two stationary support points (110-1; 110-2) insofar as this has not already taken place beforehand; and
adjusting at least one third, movable support point (140) against the outer circumference of the metal coil (200) for stabilising the metal coil on the device (100).

10. Device (100) with a first stationary support point (110-1) and a second stationary support point (110-2) for depositing a metal coil (200) on the two support points;
**characterised in that**
a checking device (120) is provided for checking and ascertaining whether the metal coil (200) rests or would rest in a stable equilibrium position on the two stationary support points (110-1; 110-2);
at least one third, positionable support point (140) is provided; and
a control device is provided for adjusting the third support point (140) against the outer circumference of the metal coil (200) for stabilising the metal coil (200) on the device (100) if the metal coil (200) according to the determination rests or would rest in an unstable equilibrium position on the two stationary support points (110-1; 110-2).

11. Device according to claim 10, **characterised in that** the checking device (120) is constructed to check whether the following condition is fulfilled:
the diameter of the metal coil (200) is smaller than a diameter threshold value and the thickness of the metal strip is greater than a thickness threshold value and the strength of the material of the metal strip is greater than a strength threshold value; and - if the condition is fulfilled - simulating determination that the metal coil (200) would rest in an unstable equilibrium position on the two support points (110-1; 110-2).

12. Device according to claim 11, **characterised in that** the checking device (120) is further constructed to additionally check the following criteria of the condition: whether the temperature of the metal coil (200) is less than a predetermined temperature threshold value and whether the high-temperature elastic limit of the material of the metal strip is greater than a predetermined elastic limit threshold value; and to simulate determination that the metal coil (200) would rest in an unstable equilibrium position on the two support points (110-1; 110-2) only if the additional criteria are also fulfilled.

13. Device according to claim 10, **characterised in that** the checking device is constructed to perform the following steps when the metal coil (200) is deposited on the two stationary support points (110-1; 110-2):
dropping the vertical (5) from the centre of the metal coil (200) down to the support points (110-1; 110-2);
checking whether the vertical (5) falls into the centre between the two support points (110-1; 110-2); and
determining that the metal coil (200) rests in an unstable equilibrium position on the two support points (110-1; 110-2) if the vertical (5) does not fall at least into a predetermined vertical tolerance threshold about the centre between the two support points.

14. Device according to claim 10, **characterised in that** a force measuring device (140-1) is provided for measuring the force loading, which is accepted by the first support point (110-1), when the metal coil (200) rests on the two support points (110-1; 110-2); and
the checking device is constructed for comparing the measured force loading with the total weight of the metal coil (200) and for determining that the metal coil (200) rests in an unstable equilibrium position on the two support points (110-1; 110-2) when the measured force loading of the first support point (110-1) differs from half the total weight of the metal coil (200) by more than a predetermined load tolerance threshold.

15. Device according to claim 10, **characterised in that** two force measuring devices are provided for measuring the force loading, which is accepted by the first support point (110-1) and the second support point (110-2), when the metal coil (200) rests on the two support points (110-1; 110-2); and
the checking device (120) is constructed for comparing the measured force loadings with one another and for determining that the metal coil (200) rests in an unstable equilibrium position on the two support points (110-1; 110-2) when the measured force loadings per support point differ from one another by more than a predetermined load tolerance threshold.

16. Device according to any one of claims 10 to 15, **characterised in that** the control device (130) is constructed to move the third support point (140), for example with the help of a hydraulic cylinder, under positional control or positional regulation to a predetermined target position or to adjust it under force regulation with a predetermined target force against the outer circumference of the metal coil.

17. Device according to any one of claims 10 to 16, **characterised in that** the device (100) is a coil carriage.

18. Coil carriage (100) with a first stationary support point (110-1) and a second stationary support point (110-2) for deposit of the metal strip (206) on the two support points;
**characterised in that**
a checking device (120) is provided for checking whether the following condition is fulfilled:
whether the diameter of the metal coil (200) is smaller than a predetermined diameter threshold value and the thickness of the metal strip is greater than a predetermined thickness threshold value and the strength of the material of the metal strip is greater than a predetermined strength threshold value, and for simulating determination that the metal coil (200) would rest in an unstable equilibrium position on the two stationary support points (110-1; 110-2) if the condition is fulfilled;
at least one third, positionable support point (140) is provided; and
a control device is provided for adjusting the third support point (140) against the outer circumference of the metal coil (200) for stabilising the metal coil on the device if the metal coil (200) according to the determination rests in an unstable equilibrium position on the two stationary support points (110-1; 110-2).

## Revendications

1. Procédé pour déposer une bobine de métal (200) sur un premier point d'appui fixe (110-1) et un deuxième point d'appui fixe (110-2) d'un dispositif (100), **caractérisé par** les étapes suivantes consistant à :
vérifier et déterminer le fait de savoir si la bobine de métal (200) se trouve ou se trouverait dans une position d'équilibre instable sur les deux points d'appui fixes (110-1 ; 110-2) ; et
si tel est le cas
déposer la bobine de métal (200) sur les deux points d'appui fixes (110-1 ; 110-2), pour autant que ledit dépôt n'ait pas déjà eu lieu précédemment dans le cadre de la vérification de la position d'équilibre ; et
ajouter au moins un troisième point d'appui mobile (140) contre la périphérie externe de la bobine de métal (200) pour la stabilisation de la bobine de métal sur le dispositif.

2. Procédé selon la revendication 1,
**caractérisé en ce que**
l'étape de la vérification et de la détermination de la position d'équilibre comprend les étapes partielles suivantes consistant à :
vérifier le fait de savoir si la condition suivante est remplie :
le diamètre de la bobine de métal (200) est inférieur à une valeur de diamètre seuil et l'épaisseur du feuillard métallique est supérieure à une valeur d'épaisseur seuil et la résistance de la matière du feuillard métallique est supérieure à une valeur de résistance seuil ; et
simuler la détermination du fait que la bobine de métal (200) se trouverait dans une position d'équilibre instable sur les deux points d'appui fixes, lorsque la condition est remplie.

3. Procédé selon la revendication 1,
**caractérisé en ce que**
l'étape de la vérification et de la détermination de la position d'équilibre comprend les étapes partielles suivantes consistant à :
déposer la bobine de métal (200) sur les deux points d'appui fixes (110-1 ; 110-2) ;
abaisser la perpendiculaire (5) à partir du milieu de la bobine de métal (200) jusque sur les points d'appui (110-1 ; 110-2) ;
vérifier le fait de savoir si la perpendiculaire (5) tombe au milieu entre les deux points d'appui (110-1 ; 110-2) ; et
déterminer le fait que la bobine de métal (200) repose dans une position d'équilibre instable sur les deux points d'appui (110-1 ; 110-2) lorsque la perpendiculaire (5) ne tombe pas au moins dans un seuil prédéfini de tolérance de perpendiculaire approximativement au milieu entre les deux points d'appui fixes (110-1 ; 110-2).

4. Procédé selon la revendication 1,
**caractérisé en ce que**
l'étape de la vérification et de la détermination de la position d'équilibre comprend les étapes partielles suivantes consistant à :
déposer la bobine de métal (200) sur les deux points d'appui fixes (110-1 ; 110-2) ;
mesurer la sollicitation de force absorbée par le premier point d'appui fixe (110-1), lorsque la bobine de métal (200) repose sur les deux points d'appui (110-1 ; 110-2) ;
comparer la sollicitation de force mesurée au poids total de la bobine de métal (200) ; et
déterminer le fait que la bobine de métal (200) repose dans une position d'équilibre instable sur les deux points d'appui fixes (110-1 ; 110-2) lorsque la sollicitation de force mesurée du premier point d'appui (110-1) s'écarte, à concurrence d'une valeur supérieure à un seuil prédéfini de tolérance de sollicitation, de la moitié du poids total de la bobine de métal (200).

5. Procédé selon la revendication 1,
**caractérisé en ce que**
l'étape de la vérification et de la détermination de la position d'équilibre comprend les étapes partielles suivantes consistant à :
déposer la bobine de métal (200) sur les deux points d'appui fixes (110-1 ; 110-2) ;
mesurer la sollicitation de force absorbée par le premier point d'appui fixe (110-1) et par le deuxième point d'appui (110-2), lorsque la bobine de métal (200) repose sur les deux points d'appui (110-1 ; 110-2) ;
comparer l'une à l'autre les sollicitations de force mesurées ; et
déterminer le fait que la bobine de métal (200) repose dans une position d'équilibre stable sur les deux points d'appui (110-1 ; 110-2) lorsque les sollicitations de force mesurées par point d'appui s'écartent l'une de l'autre à concurrence d'une valeur supérieure à un seuil prédéfini de tolérance de sollicitation.

6. Procédé selon l'une quelconque des revendications précédentes,
**caractérisé en ce que**
les deux points d'appui fixes (110-1 ; 110-2) sont disposés l'un à côté de l'autre à la même hauteur.

7. Procédé selon l'une quelconque des revendications précédentes,
**caractérisé en ce que**
le troisième point d'appui mobile (140) et éventuellement d'autres points d'appui mobiles sont ajoutés en dessous du plan médian de la bobine de métal (200) contre la périphérie externe de cette dernière, si bien qu'ils peuvent absorber respectivement au moins une partie du poids total de la bobine de métal.

8. Procédé selon l'une quelconque des revendications précédentes,
**caractérisé,en ce que**
l'addition dudit au moins un troisième point d'appui (140) contre la bobine de métal (200) a lieu sans modifier le dépôt instable de la bobine de métal sur les deux points d'appui fixes (110-1 ; 110-2).

9. Procédé pour déposer une bobine de métal (200) sur un premier point d'appui fixe (110-1) et un deuxième point d'appui fixe (110-2) d'un dispositif (100), **caractérisé par** les étapes suivantes consistant à:
vérifier le fait de savoir si la condition est remplie ou non, selon laquelle le diamètre de la bobine de métal (200) est inférieur à une valeur prédéfinie de diamètre seuil et l'épaisseur du feuillard métallique est supérieure à une valeur prédéfinie d'épaisseur seuil et
la résistance de la matière du feuillard métallique est supérieure à une valeur prédéfinie de résistance seuil ;
et lorsque la condition est remplie :
simuler la détermination du fait que la bobine de métal (200) reposerait dans une position d'équilibre instable sur les deux points d'appui fixes (110-1 ; 110-2) ;
déposer la bobine de métal (200) sur les deux points d'appui fixes (110-1 ; 110-2) pour autant que ledit dépôt n'ait pas déjà eu lieu ; et ajouter au moins un troisième point d'appui mobile (140) contre la périphérie externe de la bobine de métal (200) pour la stabilisation de la bobine de métal sur le dispositif (100).

10. Dispositif (100) comprenant :
un premier point d'appui fixe (110-1) et un deuxième point d'appui fixe (110-2) pour le dépôt d'une bobine de métal (200) sur les deux points d'appui ;
**caractérisé**
**en ce qu'**on prévoit un mécanisme de vérification (120) pour la vérification et la détermination du fait de savoir si la bobine de métal (200) repose ou reposerait dans une position d'équilibre stable sur les deux points d'appui fixes (110-1 ; 110-2) ;
**en ce qu'**on prévoit un troisième point d'appui (140) qui peut être positionné ; et
**en ce qu'**on prévoit un mécanisme de commande (130) pour l'addition du troisième point d'appui (140) contre la périphérie externe de la bobine de métal (200) pour la stabilisation de la bobine de métal (200) sur le dispositif (100), lorsque la bobine de métal (200) repose ou se reposerait, conformément à la détermination, dans une position d'équilibre instable sur les deux points d'appui fixes (110-1 ; 110-2).

11. Dispositif selon la revendication 10,
**caractérisé en ce que**
le mécanisme de vérification (120) est réalisé pour vérifier le fait de savoir si la condition suivante est remplie : le diamètre de la bobine de métal (200) est inférieur à une valeur de diamètre seuil et l'épaisseur du feuillard métallique est supérieure à une valeur d'épaisseur seuil et la résistance de la matière du feuillard métallique est supérieure à une valeur de résistance seuil ; et - lorsque la condition est remplie - pour simuler la détermination du fait que la bobine de métal (200) se reposerait dans une position d'équilibre instable sur les deux points d'appui (110-1 ; 110-2).

12. Dispositif selon la revendication 11,
**caractérisé en ce que**
le mécanisme de vérification (120) est en outre réalisé pour vérifier également les critères suivants de la condition : le fait de savoir si la température de la bobine de métal (200) est inférieure à une valeur prédéfinie de température seuil et le fait de savoir si la limite d'étirage à chaud de la matière du feuillard métallique est supérieure à une valeur seuil prédéfinie de limite d'étirage ; et pour ne simuler la détermination du fait que la bobine de métal (200) reposerait dans une position d'équilibre instable sur les deux points d'appui (110-1 ; 110-2) que lorsque les critères supplémentaires sont également satisfaits.

13. Dispositif selon la revendication 10,
**caractérisé en ce que**
le mécanisme de vérification (120) est réalisé pour mettre en oeuvre les étapes suivantes, lorsque la bobine de métal (200) a été déposée sur les deux points d'appui fixes (110-1 ; 110-2), consistant à :
abaisser la perpendiculaire (5) à partir du milieu de la bobine de métal (200) jusque sur les points d'appui (110-1 ; 110-2) ;
vérifier le fait de savoir si la perpendiculaire (5) tombe au milieu entre les deux points d'appui (110-1 ; 110-2) ; et
déterminer le fait que la bobine de métal (200) repose dans une position d'équilibre instable sur les deux points d'appui (110-1 ; 110-2) lorsque la perpendiculaire (5) ne tombe pas au moins dans un seuil prédéfini de tolérance de perpendiculaire approximativement au milieu entre les deux points d'appui (110-1 ; 110-2).

14. Dispositif selon la revendication 10,
**caractérisé**
**en ce qu'**on prévoit un mécanisme de mesure de force pour mesurer la sollicitation de force absorbée par le premier point d'appui (110-1), lorsque la bobine de métal (200) repose sur les deux points d'appui (110-1 ; 110-2) ; et
le mécanisme de vérification (120) est réalisé pour la comparaison de la sollicitation de force mesurée au poids total de la bobine de métal (200) et pour la détermination du fait que la bobine de métal (200) repose sur les deux points d'appui (110-1 ; 110-2) dans une position d'équilibre instable, lorsque la sollicitation de force mesurée du premier point d'appui (110-1) s'écarte, à concurrence d'une valeur supérieure à un seuil prédéfini de tolérance de sollicitation, de la moitié du poids total de la bobine de métal (200).

15. Dispositif selon la revendication 10,
**caractérisé**
**en ce qu'**on prévoit deux mécanismes de mesures de force pour mesurer la sollicitation de force absorbée par le premier point d'appui (110-1) et le deuxième point d'appui (110-2), lorsque la bobine de métal (200) repose sur les deux points d'appui (110-1 ; 110-2) ; et
le mécanisme de vérification (120) est réalisé pour comparer l'une à l'autre les sollicitations de force mesurées et pour déterminer le fait que la bobine de métal (200) se trouve dans une position d'équilibre instable sur les deux points d'appui (110-1 ; 110-2) lorsque les sollicitations de force mesurées par point d'appui s'écartent l'une de l'autre à concurrence d'une valeur supérieure à un seuil prédéfini de tolérance de sollicitation.

16. Dispositif selon l'une quelconque des revendications 10 à 15,
**caractérisé en ce que**
le mécanisme de commande (130) est réalisé pour placer le troisième point d'appui (140), par exemple à l'aide d'un cylindre hydraulique, d'une manière qui permet de commander la position ou d'une manière qui permet de régler la position, dans une position de consigne prédéfinie ou pour l'ajouter d'une manière telle que la force est réglée avec une force de consigne prédéfinie, contre la périphérie externe du feuillard métallique.

17. Dispositif selon l'une quelconque des revendications 10 à 16,
**caractérisé en ce que**,
en ce qui concerne le dispositif (100), il s'agit d'un chariot pour bobines.

18. Chariot pour bobines (100) comprenant
un premier point d'appui fixe (110-1) et un deuxième point d'appui fixe (110-2) pour le dépôt de la bobine de métal (200) sur les deux points d'appui ;
**caractérisé**
**en ce qu'**on prévoit un mécanisme de vérification (120) pour vérifier le fait de savoir si la condition suivante est remplie : le fait de savoir si le diamètre de la bobine de métal (200) est inférieur à une valeur prédéfinie de diamètre seuil et l'épaisseur du feuillard métallique est supérieure à une valeur prédéfinie d'épaisseur seuil et la résistance de la matière du feuillard métallique est supérieure à une valeur prédéfinie de résistance seuil ; et pour simuler la détermination du fait que la bobine de métal (200) reposerait dans une position d'équilibre instable sur les deux points d'appui fixes (110-1 ; 110-2) lorsque la condition est remplie ;
**en ce qu'**on prévoit un troisième point appui (140) qui peut être positionné ; et
**en ce qu'**on prévoit un mécanisme de commande (130) pour l'addition du troisième point d'appui (140) contre la périphérie externe de la bobine de métal (200) pour la stabilisation de la bobine de métal sur le dispositif, lorsque la bobine de métal (200) repose, conformément à la détermination, dans une position d'équilibre instable sur les deux points d'appui fixes (110-1 ; 110-2).
